# EUROPEAN PATENT SPECIFICATION

(11) **EP 0 957 223 B1**
(45) Date of publication and mention of the grant of the patent: **05.11.2003**
(21) Application number: 98830288.1
(22) Date of filing: 14.05.1998
(51) Int. Cl.: E05D 5/02, F16B 13/00

(54) **Furniture accessory**
Zubehör für Möbel
Accessoire pour mobilier

(43) Date of publication of application: 17.11.1999
(73) Proprietor: Formenti & Giovenzana S.p.A., 20050 Veduggio Con Colzano (Milano) (IT)
(72) Inventor: Formenti, Giancarlo, 20050 Veduggio con Colzano (Milano) (IT)
(74) Representative: Simino, Massimo

(56) References cited:
- EP-A- 0 755 640
- DE-C- 2 660 245
- FR-A- 2 387 342
- FR-A- 2 502 675
- GB-A- 1 274 994
- US-A- 5 345 654

## Description

The present invention relates to a furniture accessory, such as, for example, a hinge, a guide and the like, comprising a plate and fixing means which are integral with the plate and can be removably fastened inside a hole formed in a wall of a piece of furniture so as to allow fixing of the accessory to the furniture.

More particularly the present invention relates to a furniture accessory designed for rapid fixing to the wall of a piece of furniture.

With the sole aim of simplifying the description of the present invention, in the description below reference will be made, in a non-limiting manner, to a snap-action hinge of the type generally used to allow the opening and closing of doors and flaps of furniture.

The snap-action hinges of the type defined above comprise a bowl-shaped part to be stably embedded in a cavity formed on the inner side of a door of the furniture and a flange fixed to an inner wall of the furniture and having one end hinged with the bowl-shaped part. Fixing of the hinge to the door is performed by means of fixing screws which engage in suitable holes formed in the metal plate from which the bowl-shaped part extends.

The above-mentioned screw fixing system is generally used also for accessories, such as, for example, the guides for drawers, which are different from hinges.

However, it must be pointed out that the screw fixing system, however satisfactory it may be from the point of view of reliability over time, is unsatisfactory as regards the rapidity and, in particular, the simplicity of assembly.

In this connection it should be considered that in the furniture industry a particularly important need is to be able to reduce increasingly the time required for assembly of the various components both at the factory and at the user site.

Moreover, in the case of furniture which is intended to be sold in the unassembled state, it is obvious that the system for fixing said furniture and their accessories must be particularly simple since assembly thereof is performed by the users, i.e. by unqualified persons. Since the screw fixing system requires a reasonable degree of practical skill, it is obvious that it is not suitable for use on furniture which is sold in the unassembled state.

It must also be remembered that the screw fixing system does not allow repeated assembly and disassembly of the accessories since, even after a couple of times, the holes into which the screws are inserted tend to widen and the thread of the screws is no longer able to grip.

Document FR 2502675 discloses a furniture accessory according to the preamble of claim 1.

The problem underlying the present invention is that of devising a furniture accessory designed to be fixed to a piece of furniture in a simple, rapid and inexpensive manner, so as to satisfy the aforementioned requirements and overcome at the same time the drawbacks associated with the screw fixing system.

This problem is solved by the furniture accessory of the type specified in Claim 1.

Advantageously, the aforementioned accessory can be removably fixed to the wall of the furniture by means of expansion of the expandable element, said expansion being obtained by exerting simple pressure on the expansion means, without the need to use any type of tool or implement.

Further characteristic features and advantages of the furniture accessory according to the present invention will emerge from the description which follows of a preferred embodiment thereof, provided by way of a non-limiting example, with reference to the accompanying drawings in which:
- Figure 1 shows an exploded perspective view of an accessory intended to be removably fixed to a piece of furniture;
- Figure 2 shows a partially sectioned view of the accessory according to Figure 1;
- Figure 3 shows a partially sectioned view of a detail of the accessory according to Figure 1 during the stage of fixing to a piece of furniture;
- Figure 4 shows a partially sectioned view of the detail according to Figure 3 after fixing to the furniture;
- Figure 5 shows a perspective view of a second accessory according to the invention; and
- Figure 6 shows an exploded perspective view of the accessory according to Figure 5.

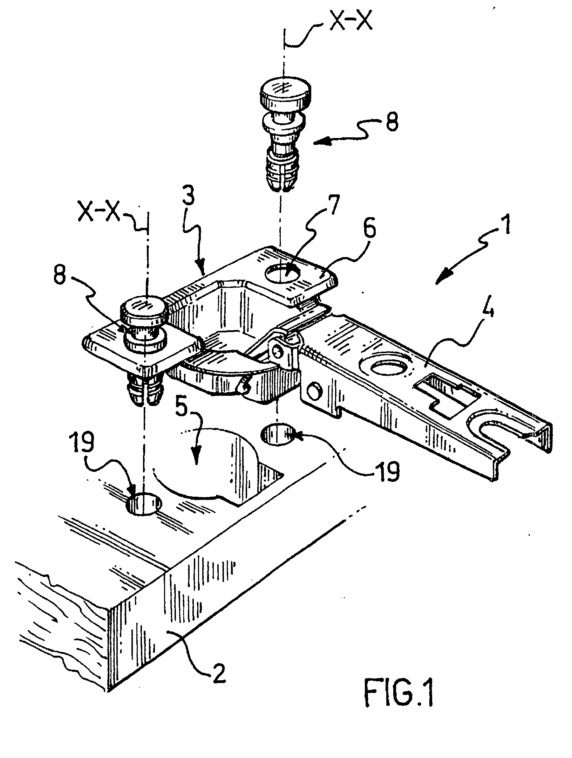

With reference to Figures 1 to 4, 1 generally denotes an accessory intended to be removably fixed to a piece of furniture.

In the example, the accessory 1 is realised in the form of a snap-action hinge designed to allow opening and closing of a door 2 of a piece of furniture.

The hinge 1 comprises a bowl-shaped part 3 which is to be embedded in a cavity 5 formed on the inner side of the door 2 and a flange 2 combined, in a manner known per se, with the bowl-shaped part 3 so as to be angularly movable with respect thereto. The flange 4 is intended to be fixed to an inner wall of the furniture, not shown in the figures, preferably via a connecting plate.

The bowl-shaped part 3 accommodates resilient means which act on the flange 4 so as to ensure the snap-action closure of the hinge 1.

The bowl-shaped part 3 has an upper plate 6 projecting laterally and containing holes 7, which in the example are two in number, each being designed to receive means 8 for fixing the bowl-shaped part 3 to the wall 2.

Said fixing means 8 comprise a wall mounting bush 9 which is integrally inserted into a hole 7 of the plate 6, an expandable element 10 which is connected to the wall mounting bush 9 and expansion means 11 for expanding said expandable element 10.

The wall mounting bush 9 comprises a hollow cylinder with a predetermined axis X-X and a first and second axial abutment surface which are respectively indicated by 12 and 14 and project radially outwards. The diameter of the axial abutment surfaces 12 and 14 is greater than that of the hole 7 of the plate 6. The two axial abutment surfaces 12 and 14 define between them a seat 13, i.e. a recess, which allows the snap-action fixing of the wall-mounting bush 9 inside the hole 7 of the plate 6.

Preferably the first axial abutment surface 12 is positioned at the top end of the wall mounting bush 9.

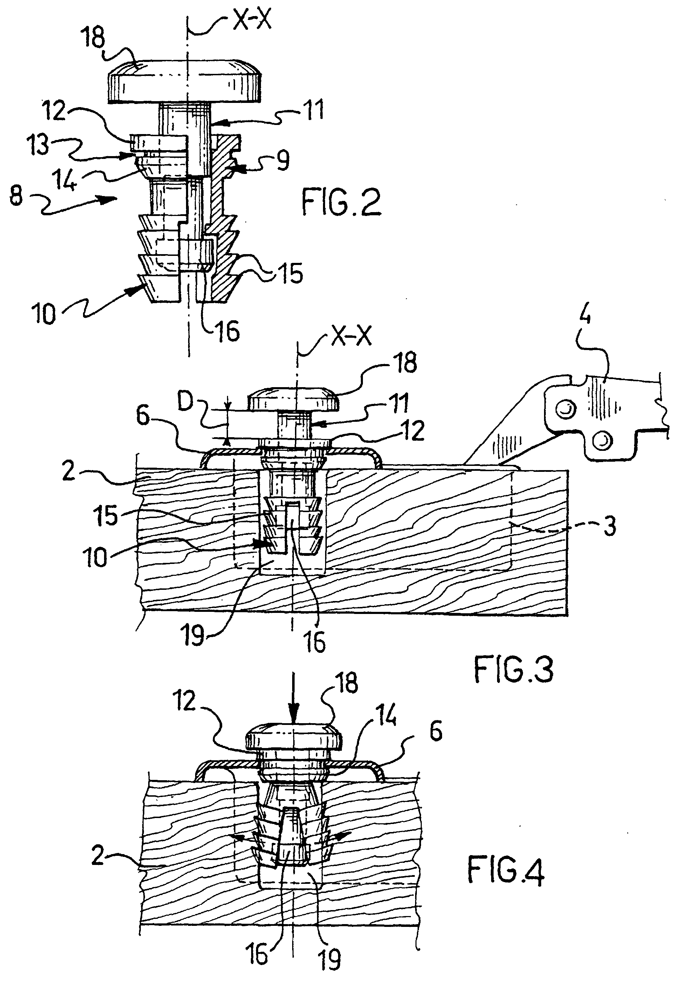

The height of the seat 13, i.e. the axial distance between the two axial abutment surfaces, is substantially equal to the thickness of the plate 6 of the hinge 1 such that, when the wall mounting bush 9 is inserted into the hole 7, the plate 6 of the hinge 1 snap-engages into the seat 13, as illustrated in Figures 3 and 4.

The expandable element 10 extends in the axial direction X-X as an extension of the wall mounting bush 9, from the bottom end thereof.

Preferably the expandable element 10 is formed as one piece with the wall mounting bush 9.

In the example, the expandable element 10 is realised in the form of a sleeve having a free end formed by a plurality of circumferential segments which in the example are four in number and resiliently yielding in a substantially radial direction.

The expandable element 10 is intended to be inserted into a corresponding hole 19 formed on the inner side of the door 2, inside which it is fastened once expansion has taken place.

In order to ensure a better grip inside the hole 19, the expandable element 10 comprises a plurality of ribs 15 projecting radially therefrom. Preferably the ribs 15 are in the form of a sawtooth oriented so as to favour insertion of the expandable element 10 into the hole 19.

Preferably the expansion means 11 are realised in the form of a pin with an expansion head 16.

The pin 11 is inserted into the sleeve 10 so as to be axially movable with respect thereto between an advanced end-of-travel position (Fig. 4), in which the expansion head 16 interferes with the circumferential segments, forcing them to expand radially outwards, and a retracted end-of-travel position (Fig. 3), in which the expansion head 16 is fully housed in an internal seat of the sleeve 10 so as not to interfere with the circumferential segments of the sleeve 10.

Preferably, the expansion head 16 has a conical portion for favouring insertion of the expansion head 16 into the expandable element 10.

The expansion head 16 is connected, by means of a shank extending axially through the wall mounting bush 9, to an actuating head 18 located outside the wall mounting bush 9.

The size of the pin 11 is such that, when said pin is in the aforementioned retracted position (Fig. 3), the actuating head 18 is separated from the wall mounting bush 9 by a predetermined distance D. On the other hand, when the pin 11 is in the advanced end-of-travel position (Fig. 4), the actuating head 18 is located in abutment against the wall mounting bush 9 and, more precisely, against the first axial abutment surface 12.

The wall mounting bush 9 and the sleeve 10 may be made of plastic material or of another elastically deformable material.

In order to facilitate snap-engagement of the wall mounting bush 9 inside the hole 7, the second axial abutment surface 14, namely the one closest to the expandable element 10, has a flared receiving surface for insertion into the holes 7 of the plate 6.

If necessary, the hinge 1 may be equipped with a cover, not shown in the figures, to be fixed by means of pressure to the plate 6 and having the function of concealing from view the plate 6 and the fixing means 8.

Fixing of the fixing means 8 to the plate 6 of the hinge 1 is obtained by inserting the said means into the hole 7 via the free end of the sleeve 10 formed by the plurality of resiliently yielding circumferential segments. During insertion of the fixing means 8, the pin 11 must be located in the retracted position.

In order to obtain snap-engagement of the plate 6 into the seat 13, it is sufficient to force the second axial abutment surface 14 against the plate 6 in the region of the hole 7 until the second axial abutment surface 14 passes through the hole 7 following slight resilient deformation thereof. This pressure may be easily applied by acting on the first axial abutment surface 12 of the wall mounting bush 9. The aforementioned insertion is favoured by the presence of the flared receiving surface of the second axial abutment surface 14.

Fixing of the hinge to the door 2 of the furniture is obtained by inserting the bowl-shaped part 3 into the cavity 5. At the same time the fixing means 18, in particular the expandable elements, are inserted into the holes 19 of the door 2. During this step, the expansion means, namely the pin 11, must be located in the above-mentioned retracted position (Fig. 3), where the expansion head 16 does not interfere with the circumferential segments of the sleeve 10.

Then, by exerting a pressure on the actuating head 18, the pin 11 is moved forwards into the advanced end-of-travel position (Fig. 4), where the expansion head 16 interferes with the circumferential segments forcing them to expand circumferentially, with consequent gripping of the ribs 15 against the wall of the hole 19.

As a result of expansion of the expandable elements 10 inside the holes 19, the hinge 1 is firmly fastened to the door 2 of the furniture.

Should it be necessary to remove the hinge 1 from the door 2 it is sufficient to exert manually, or if necessary with the aid of the cover, a light pressure underneath the actuating head 18 until retraction of the pin 11 into the retracted end-of-travel position (Fig. 3) occurs. By doing so, in fact, the expandable elements 10 are no longer forced into the expanded position and can be removed from the holes 19 without producing unwanted widening of the latter. Therefore, the holes 19 thereof remain ready for subsequent fixing operations.

Advantageously, after removal of the hinge 1, the door 2 of the furniture remains without any extraneous element used for performing fixing.

It should be pointed out that, once assembly has been completed, any forces tending to cause separation of the hinge 1 from the door 2 do not stress the expansion means 11, i.e. the pin. In fact, the above-mentioned forces are transmitted directly from the plate 6 of the hinge 1 to the wall mounting bush 9 and hence to the sleeve 10. As a result of this, it is possible to apply a minimum force on the expansion means 11 during the operations of assembly and disassembly of the hinge 1 from the door 2 of the furniture, while ensuring firm fixing between the hinge 1 and the door 2.

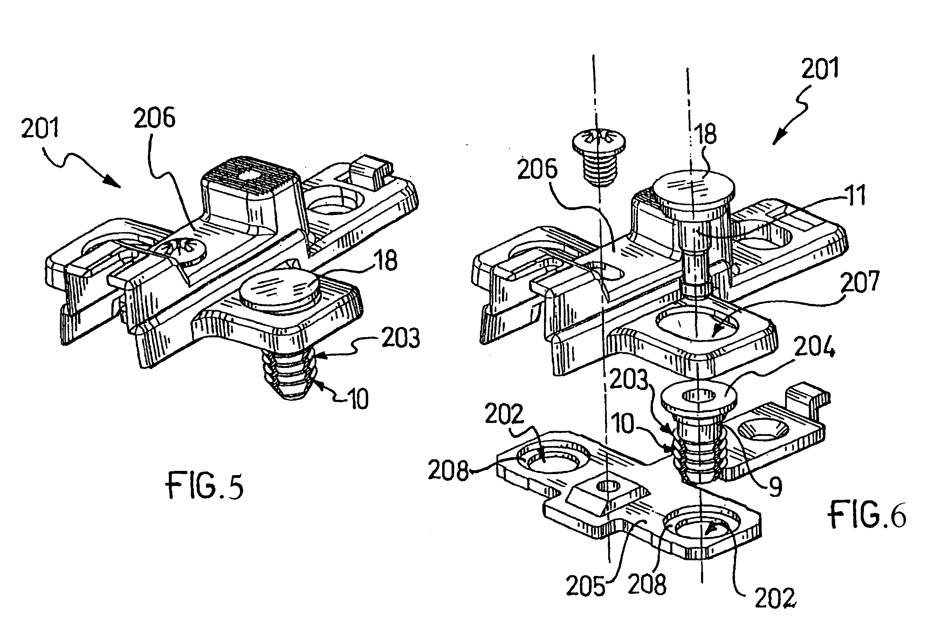

With reference to Figures 5 and 6, 201 denotes generically an accessory according to the invention intended to be removably fixed to a piece of furniture.

In the example, the accessory 201 is realised in the form of a connecting plate for fixing the flange of a snap-action hinge to the wall of a piece of furniture, for example the flange 4 of the hinge 1.

The connecting plate 201 comprises a plate 205 with which a cover plate 206 is associated. Said plates 205 and 206 are fixed together by means of clamping screws and interlocking means which are known per se and which allow adjustment of the position of the cover plate 206 to which the flange of the hinge is fixed, with respect to that of the plate 205 which is directly fixed to the wall of the furniture.

The plate 205 comprises holes 202 designed to receive fixing means 203 for fixing the said plate to the wall of the furniture.

The fixing means 203 differ from the fixing means 8 described above owing to the fact that the bush 9 has only one axial abutment surface 204 positioned at the top end, so as to form an end flange.

The fixing means 203 are fixed to the plate 205 of the hinge 1 by inserting them into the hole 202 via the free end of the sleeve 10, until the axial abutment surface 204 comes into abutment against the plate 205. Then the cover plate 206 is associated with the plate 205 so that it locks the axial abutment surface 204 against the plate 205.

Each hole 202 has, formed in the thickness of the plate 205, an annular seat 208 which is designed to receive the axial abutment surface 204.

The cover plate 206 comprises holes 207 which are coaxial with the holes 202 of the plate 205. The holes 207 allow insertion of the expansion means 11, namely the pin, of the fixing means 203.

The operation of fixing the connecting plate 201 to a wall of the furniture is similar to that described above for the hinge 1 and is based on the expansion of the expandable element 10 of the fixing means 203 inside a respective hole of the wall of the furniture.

As can be appreciated from the above description, with the furniture accessory according to the invention it is possible to satisfy the requirements referred to in the introductory part of the present description and overcome at the same time the drawbacks associated with the screw fixing system.

A further advantage of the furniture accessory according to the invention lies in the fact that it is simple and inexpensive to manufacture.

Obviously a person skilled in the art, in order to satisfy contingent and specific requirements, may make numerous modifications and variations to the furniture accessory described above, all of which, however, are contained within the protective scope of the invention as defined by the claims below.

## Claims

1. Furniture accessory comprising a plate (6;105;205) and fixing means (8;103;203) which can be fixedly connected to the plate (6;105;205) and can be removably fastened inside a hole (19) of a piece of furniture for fixing the accessory to the furniture, wherein said fixing means (8;103;203) comprise:
- a wall mounting bush (9) which is removably engaged with the plate (6;105;205), inside a hole (7;102;202) thereof, by means of a coupling system consisting of projections and recesses (12,14;104;204),
- an expandable element (10) connected to the wall mounting bush (9), and
- expansion means (11) for expanding said expandable element (10),
**characterised in that**:
- a cover plate (206) is associated with the plate (205); and
- the wall mounting bush (9) comprises an axial abutment surface (204) projecting outwards,
the wall mounting bush (9) being inserted inside the hole (202) of the plate (205) with the axial abutment surface (204) kept in abutment against the plate (205) by the cover plate (206).

2. Accessory according to Claim 1, in which said expandable element comprises a sleeve (10) having a plurality of circumferential segments resiliently yielding in a substantially radial direction.

3. Accessory according to Claim 2, in which said expandable element (10) comprises a plurality of ribs (15) projecting radially therefrom.

4. Accessory according to any one of the preceding claims, in which said expansion means comprise a pin (11) which can be inserted into said expandable element (10) and which has an expansion head (16), during insertion of the pin (11) said expansion head (16) causing radial expansion of said expandable element (10).

5. Accessory according to Claim 4, in which said expansion head (16) comprises a conical portion for favouring insertion into the expandable element (10).

6. Accessory according to Claim 2, in which said pin (11) comprises an actuating head (18) for allowing extraction of the pin (11) from the expandable element (10).

7. Accessory according to Claim 1, in which said wall mounting bush (9) is made of plastic material.

8. Accessory according to Claim 1, in which said wall mounting bush (9) is inserted into said hole (7;102) of the plate (6;105).

9. Accessory according to Claim 1, in which the cover plate (206) comprises a hole (207) substantially coaxial with the hole (202) of the plate (205), so as to allow insertion of the expansion means (11).

## Patentansprüche

1. Möbelzubehör mit einer Platte (6; 105; 205) und mit einer Befestigungseinrichtung (8; 103; 203), die mit der Platte (6; 105; 205) fest verbunden sein kann und die zur Befestigung des Zubehörs an dem Möbel innerhalb eines Loches (19) eines Teiles des Möbels lösbar befestigt sein kann, wobei die genannte Befestigungseinrichtung (8; 103; 203)
- eine Wandanbringungsbuchse (9), die mit der Platte (6; 105; 205) innerhalb eines Loches (7; 102; 202) der betreffenden Platte mittels eines Verbindungssystems lösbar in Eingriff ist, welches aus Vorsprüngen und Ausnehmungen (12, 14; 104; 204) besteht,
- ein spreizbares Element (10), welches mit der Wandanbringungsbuchse (9) verbunden ist
- und eine Spreizeinrichtung (11) zum Spreizen des genannten spreizbaren Elements (10) umfasst,
**dadurch gekennzeichnet,**
- **dass** der Platte (205) eine Abdeckplatte (206) zugeordnet ist
- und **dass** die Wandanbringungsbuchse (9) eine nach außen abstehende axiale Anlagefläche (204) aufweist,
- wobei die Wandanbringungsbuchse (9) in das Loch (202) der Platte (205) derart eingeführt wird bzw. ist, dass die axiale Anlagefläche (204) durch die Abdeckplatte (206) in Anlage an der Platte (205) gehalten wird bzw. ist.

2. Zubehör nach Anspruch 1, wobei das genannte spreizbare Element eine Hülse (10) mit einer Vielzahl von Umfangssegmenten aufweist, die in einer im wesentlichen radialen Richtung federnd nachgeben.

3. Zubehör nach Anspruch 2, wobei das genannte spreizbare Element (10) eine Vielzahl von Rippen (15) aufweist, die von ihm radial abstehen.

4. Zubehör nach einem der vorhergehenden Ansprüche, wobei die genannte Spreizeinrichtung einen Stift (11) aufweist, der in das genannte spreizbare Element (10) eingeführt werden kann und der einen Spreizkopf (16) aufweist, wobei während des Einführens des Stifts (11) der genannte Spreizkopf (16) eine radiale Spreizung des genannten spreizbaren Elements (10) bewirkt.

5. Zubehör nach Anspruch 4, wobei der genannte Spreizkopf (16) einen konischen Teil zur Begünstigung der Einführung in das spreizbare Element (10) aufweist.

6. Zubehör nach Anspruch 2, wobei der genannte Stift (11) einen Betätigungskopf (18) aufweist, der ein Herausziehen des Stifts (11) aus dem spreizbaren Element (10) gestattet.

7. Zubehör nach Anspruch 1, wobei die genannte Wandanbringungsbuchse (9) aus Kunststoffmaterial besteht.

8. Zubehör nach Anspruch 1, wobei die genannte Wandanbringungsbuchse (9) in das genannte Loch (7; 102) der Platte (6; 105) eingeführt ist.

9. Zubehör nach Anspruch 1, wobei die Abdeckplatte (206) ein Loch (207) aufweist, welches im wesentlichen koaxial zu dem Loch (202) der Platte (205) verläuft, derart, dass eine Einführung der Spreizeinrichtung (11) gestattet ist.

## Revendications

1. Accessoire pour mobilier comprenant une plaque (6;105;205) et des moyens de fixation (8;103;203) qui peuvent être connectés de façon fixe à la plaque (6;105;205) et peuvent être fixés de manière amovible à l'intérieur d'un trou (19) d'un élément de mobilier afin de fixer l'accessoire au mobilier, dans lequel lesdits moyens de fixation (8;103;203) comprennent :
- une douille (9) de montage sur une paroi, qui est engagée de façon amovible avec la plaque (6;105;205), à l'intérieur d'un trou (7;102;202) de celle-ci, au moyen d'un système de couplage consistant en projections et cavités (12,14;104;204) ;
- un élément expansible (10) connecté à la douille (9) de montage sur une paroi ; et
- des moyens d'expansion (11) pour réaliser l'expansion dudit élément expansible (10),
**caractérisé par le fait que** :
- une plaque de recouvrement (206) est associée à la plaque (205) ; et
- la douille (9) de montage sur une paroi comprend une surface de butée axiale (204) se projetant vers l'extérieur,
la douille (9) de montage sur une paroi étant introduite à l'intérieur du trou (202) de la plaque (205) avec la surface de butée axiale (204) maintenue en butée contre la plaque (205) par la plaque de recouvrement (206).

2. Accessoire selon la revendication 1, dans lequel ledit élément expansible comprend un manchon (10) ayant une pluralité de segments périphériques fluant de façon élastique dans une direction sensiblement radiale.

3. Accessoire selon la revendication 2, dans lequel ledit élément expansible (10) comprend une pluralité de nervures (15) se projetant radialement à partir de celui-ci.

4. Accessoire selon l'une quelconque des revendications précédentes, dans lequel lesdits moyens d'expansion comprennent une broche (11) qui peut être introduite dans ledit élément expansible (10) et qui a une tête d'expansion (16), ladite tête d'expansion (16) provoquant une expansion radiale dudit élément expansible (10) pendant l'introduction de la broche (11).

5. Accessoire selon la revendication 4, dans lequel ladite tête d'expansion (16) comprend une partie conique pour favoriser l'introduction dans l'élément expansible (10).

6. Accessoire selon la revendication 2, dans lequel ladite broche (11) comprend une tête d'actionnement (18) pour permettre l'extraction de la broche (11) à partir de l'élément expansible (10).

7. Accessoire selon la revendication 1, dans lequel ladite douille (9) de montage sur une paroi est faite de matière plastique.

8. Accessoire selon la revendication 1, dans lequel ladite douille (9) de montage sur une paroi est introduite dans ledit trou (7;102) de la plaque (6;105).

9. Accessoire selon la revendication 1, dans lequel la plaque de recouvrement (206) comprend un trou (207) sensiblement coaxial avec le trou (202) de la plaque (205), de façon à permettre une introduction des moyens d'expansion (11).
